# EUROPEAN PATENT APPLICATION

(11) **EP 4 726 457 A1**
(43) Date of publication of application: **15.04.2026**
(21) Application number: 24383096.5
(22) Date of filing: 08.10.2024
(51) Int. Cl.: G02B 26/10, G01S 17/88, G02B 26/08

(54) **BEAM AIMING AND/OR DETECTING WITH MEMS MIRROR**

(71) Applicant: Beamagine S.L., 08755 Castellbisbal (ES)
(72) Inventor: ROYO, Santiago, Castellbisbal (ES); RIU, Jordi, Castellbisbal (ES); GARCÍA-GÓMEZ, Pablo, Castellbisbal (ES); BAS, Isidro, Castellbisbal (ES); GIMÉNEZ, Sara, Castellbisbal (ES)
(74) Representative: Elion IP, S.L.

(57) **Abstract**

A computer-implemented method comprising: controlling at least one light source to emit at least one light beam; controlling at least one mirror to scan the at least one light beam in a first direction; and controlling a microelectromechanical system, MEMS, mirror that the at least one light beam impinges on and directs towards the at least one mirror, wherein the MEMS mirror is controlled to modify how the at least one light beam impinges on the at least one mirror to further scan the at least one light beam in at least a second direction not parallel to the first direction. Also, an apparatus and a method.

## Description

### TECHNICAL FIELD

The present disclosure relates to the field of beam aiming and detecting. More particularly, the present disclosure relates to methods, apparatuses and systems that aim and/or detect beams, such as light beams, with the use of at least one microelectromechanical system mirror.

### BACKGROUND

Many industries require accurate radiation of beams towards a specific point in space and/or accurate detection of beams coming from space. In many occasions, such radiation or detection is/are part of a scanning process whereby beams are scanned for irradiation of a particular area in space, for example a target (e.g., one or more objects) in a volume or environment and which is scanned to, e.g., determine features of, process, transmit data to, receive data from, etc., the target. Some non-limiting example applications that such industries may use are, for instance, LIDAR, optical communications, additive manufacturing, soldering, etc.

Accuracy in the aiming of radiated beams and/or detection of the beams is important to be capable of performing the intended operation with few or no errors. Additionally, not only the aiming is important, but also how the beam is scanned, especially when the irradiated target is at a long distance from the apparatus producing and/or receiving the beams, when there is relative movement (especially at higher speeds) between the target and the apparatus, and/or when the target has a particular surface, since each of these situations causes non-uniform coverage of areas of the target. Namely, different pairs of adjacent scanning points do not point at different pairs of points on the target with same distance therebetween.

Overcoming these situations is challenging as compensation of the problematic behavior is necessary. Oftentimes, it is difficult to detect that the problematic behavior exists in the first place, and if detected, applying a compensation technique may be cumbersome or not effective enough for numerous reasons.

As the field of view (FOV) is made larger, in one axis (e.g., a horizontal FOV) or in two axes (e.g., horizontal and vertical FOVs), the compensation becomes more challenging as the problems pile up and get exacerbated, such as, for example: the scanning for the FOV may result in too small spatial resolution of the irradiated target; keeping a uniform resolution in two directions may not be possible, when a two-axis FOV is involved; in configurations in which the radiating apparatus is also the detecting apparatus, reflecting and focusing the received beams to a detector after the beams have impinged on the target; achieving of sufficient signal-to-noise ratio at the receiving optics when the irradiated target is at a long distance from the receiving (and, optionally, radiating) apparatus; the scanning may be too slow for highly-variable environments, especially for tracking or pointing at moving targets; stability and compactness of radiating and/or receiving apparatuses owing to the components needed for radiating, scanning and/or detecting beams.

It would be desirable to have ways of aiming and/or detecting beams that may solve one or more of the aforesaid problems.

### SUMMARY

A first aspect relates to a method. The method comprises controlling at least one radiation source to emit at least one beam; and at least one mirror to scan the at least one beam in a first direction. The method also comprises controlling a microelectromechanical system (MEMS) mirror that the at least one beam impinges on and directs towards the at least one mirror. The MEMS mirror is controlled to modify how the at least one beam impinges on the at least one mirror to further scan the at least one beam in at least a second direction not parallel to the first direction.

The radiation of the at least one beam out from an apparatus or system including the at least one mirror and the MEMS mirror uses at least two mirrors to scan the at least one beam in two directions, thereby providing a FOV (i.e., field of view) in two directions. The first and second directions may be perpendicular in some embodiments so, for example but without limitation, the first direction may define a horizontal field of view and the second direction may define a vertical field of view, or vice versa. In the context of the present disclosure, the at least one mirror, i.e., the one or more mirrors not described as being MEMS, is also referred to as at least one conventional mirror for the sake of clarity.

The at least one beam is first directed towards the MEMS mirror, which due to the movement thereof scans the beam in at least one of the two directions. The maximum speed of the MEMS mirror is greater than the maximum speed of the at least one conventional mirror. Accordingly, the scanning along the second direction may be conducted at a higher speed and perform entire scanning according to a predetermined trajectory in the second direction with little or no change in scanning position along the first direction. In this sense, the at least one conventional mirror may keep moving even during the scanning in the second direction, namely the scanning in the first direction is continuous and keeps rotating a plane of oscillation, yet the MEMS mirror scans at a fast speed and, in some embodiments, moves in two directions to scan the at least one beam in the first and second directions to compensate the ongoing movement in the first direction; the latter, therefore, attains scanning along the second direction in a steady manner in spite of the continuous scanning in the first direction. Alternatively, in some embodiments, the at least one conventional mirror remains motionless during the scanning of the MEMS mirror in at least the second direction, namely the scanning in the first direction by the at least one conventional mirror is stepped.

A scanning speed of the at least one beam in the second direction (i.e., the direction scanned owing to the MEMS mirror) is, in some embodiments, at least, e.g., 50 or more (e.g., 100, and/or 150, etc.) times greater than a scanning speed of the at least one beam in the first direction.

The at least one beam is then directed to the at least one conventional mirror for scanning in the other at least one of the two directions, particularly the first direction. The at least one beam reaches the at least one conventional mirror, in different portions thereof during the entire scanning procedure, as the beam is scanned in the second direction owing to the MEMS mirror. The at least one conventional mirror thus superimposes the further scanning direction (i.e., the first direction) by being moved according to a scanning routine. In sum, the at least one conventional mirror provides the FOV with a first axis and the MEMS mirror provides the FOV with a second axis.

The combination of the scanning produced by at least one conventional mirror with that produced by the MEMS mirror, together with the different speeds thereof and the possible two-dimensional movement of the MEMS mirror, enables improved controlling of how the at least one beam impinges on the target. In this sense, in some embodiments, the MEMS mirror is controlled to scan the at least one beam in the second direction while compensating, during a scanning frame by counter-scanning in the first direction (i.e., scanning in the opposite direction along the first direction), for motion occurring in the scanning frame in the first direction due to the scanning in the first direction by the at least one conventional mirror.

The MEMS mirror, which is controlled with electrical signals, can have its movement adjusted to the particularities of the scanning in the first direction and/or to particularities of the target that the beam is aimed or is to be aimed at, thereby actively compensating for various types of defects in the scanning pattern and in an effective manner owing to each of its faster scanning speed, adaptability to the operation of the at least one conventional mirror and adaptability to target particularities (speed, shape, volume, distance and/or surface thereof). This, in turn, results in greater target scanning uniformity and/or greater pointing accuracy and/or focusing of the beam on particular, smaller areas of interest. As such, in some embodiments, the MEMS mirror and the at least one conventional mirror are both controlled to track a target remote from the at least one conventional mirror.

The use of the MEMS mirror also may, in comparison with prior apparatuses, increase stability thereof with more robustness to shocks and vibrations.

The method is a computer-implemented method that runs in one or more processing devices, in an isolated manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run. The processing device or devices may be included in a radiating and/or capturing apparatus, and/or be external to the apparatus (or apparatuses when separate apparatuses for radiation and capturing are arranged), for example a processing device such as, but without limitation, a controller, a personal computer, a server, a field-programmable gate array (FPGA), a mobile phone, a tablet, and/or an application specific integrated circuit, etc., and even be remote from the apparatus(es).

In some embodiments, a length of a scanning pattern (of the at least one conventional mirror) along the first direction is greater than a length of a scanning pattern (of the MEMS mirror) along the second direction.

The scanning caused by the MEMS mirror along the second direction is of shorter length per scanning frame than the scanning caused by the at least one conventional mirror along the first direction per scanning frame. In such configurations, the greater FOV axis is governed by the at least one conventional mirror and the smaller FOV axis is governed by the MEMS mirror, and the MEMS mirror provides entire scanning frames as the scanning frame of the at least one conventional mirror progresses. These configurations improve the scanning performance as the distortion of the scanning frame in the second direction may be smaller.

In some embodiments, controlling the MEMS mirror comprises controlling an amplitude of a movement thereof and/or an orientation thereof and/or a movement speed thereof. In some embodiments, controlling the MEMS mirror comprises controlling an amplitude of the scanning at least in the second direction and/or a speed of the scanning at least in the second direction.

The compensation of potential distortions in the scanning along the second direction due to the rotation of the plane of oscillation may be attained by adjusting parameters such as the movement amplitude, the movement speed and/or the orientation of the MEMS mirror. Likewise, the compensation may be achieved by adjusting the necessary parameters of the MEMS mirror to modify the amplitude and/or the speed of the scanning thereof.

In some embodiments, the controlling of the MEMS mirror comprises adjusting a trajectory of a movement of the MEMS mirror during the scanning thereof of the at least one beam such that the trajectory is adjusted to a movement of the at least one mirror during the scanning in the first direction.

The trajectory of the MEMS mirror may be adjusted in such a way so as to cause the scanning thereof of the at least one beam to provide a field of view having either: a uniform sampling density across the field of view, that is to say, the field of view has same or similar density in an entirety thereof; or various sampling densities across the field of view, with higher sampling densities in at least some first predetermined areas of interest of the field of view that at least some second predetermined areas of interest of the field of view, which have lower sampling densities than those for the first predetermined areas of interest.

The MEMS mirror may scan the at least one beam in the first direction with variable speed and/or amplitude and/or orientation within each scanning frame of the plurality of frames (i.e., the speed and/or amplitude and/or orientation changes during the scanning frame) or between different scanning frames of the plurality of frames (i.e., the speed and/or amplitude and/or orientation is different in two or more scanning frames). Further, said variable parameter or parameters during such counter-scanning are preferably based on how the at least one conventional mirror scans the at least one beam in the first direction.

In some embodiments, the controlling of the MEMS mirror comprises: moving the MEMS mirror according to a first predetermined trajectory; moving the MEMS mirror according to a second predetermined trajectory after moving the MEMS mirror according to the first predetermined trajectory; and repeating the moving of the MEMS mirror according to the first and second predetermined trajectories a plurality of times. In some embodiments, the controlling of the MEMS mirror comprises computing the first and second predetermined trajectories for the MEMS mirror one or more times in each scanning frame.

The scanning by the MEMS mirror can be carried out in an iterative manner that involves going back and forth with the MEMS mirror to provide the scanning frame thereof that at least partially compensates for the possible scanning in the first direction (caused by the at least one conventional mirror) during the scanning frame in the second direction.

The trajectories for making the MEMS mirror go back and forth may be adjusted on-the-fly, i.e., in real time, as the scanning in the second direction is being conducted, thereby enabling changes in the trajectories depending on the detection of potential scanning defects, the setting of a region of interest to be scanned, or the detection of particular features of a target to be scanned, e.g., speed, distance and/or surface thereof. In this sense, the movement of the MEMS mirror is adapted to the changes of the at least one conventional mirror during its scanning for maintaining a homogeneous overall scanning.

The first and second predetermined trajectories at least produce an opposite scanning of the at least one beam, i.e., one scanning path being the reverse of the other scanning path, in respect of the second direction scanned so that a back-and-forth trajectory may be imparted to the MEMS mirror for scanning along the second direction.

The first and second predetermined trajectories include respective trajectories for scanning the at least one beam in the first direction by the MEMS mirror, but with such trajectories compensating for the scanning of the at least one beam in the first direction by the at least one conventional mirror.

In some embodiments, the method further comprises processing the at least one beam received by a detector after having reached a target to be detected during the scanning of the at least one beam. In some embodiments, the method also comprises computing a time of flight of the at least one beam between transmission and the reception thereof.

In addition to the transmission of the at least one beam, the detection process can also be conducted. Therefore, scattered radiation from the target that is captured by an apparatus, which may be the same as the apparatus transmitting the beam or a different apparatus, is to be directed to a detector for processing thereof. Time of flight computations may be part of the processing in the detection process so as to estimate a distance of the target from the apparatus or apparatuses involved in the transmission and detection of the at least one beam.

Transmission and detection can be carried out in a continuous manner, i.e., the at least one beam is to be detected while one or more beams are being emitted, or in a sequential manner, i.e., after emission of the at least one beam, no beam is emitted during a period of time during which detection of the at least one beam is attempted.

In some embodiments, movement of the MEMS mirror is changed between the first predetermined trajectory and the second predetermined trajectory and vice versa subsequent to having computed the time of flight for the at least one beam after having started the movement according to the respective trajectory and before changing to the movement according to the subsequent trajectory.

Time of flight values for various beams during the scanning frame provided by the MEMS mirror can be used to determine possible changes in the trajectories followed by the MEMS mirror. For example, to detect and focus on a target or a portion of the target, and optionally keep track thereof when so desired (by way of at least one configurable parameter for tracking of targets), changes in the computed time of flight may be representative of whether the beams start to impinge on a target (or portion thereof), keep impinging on a target (or portion thereof) and/or stop impinging on a target (or portion thereof). The scanning in the second direction and, particularly, the movement of the MEMS mirror is based on the computed time of flight.

This may be particularly useful, for instance, for detecting and tracking vehicles or objects of interest, detecting targets at long distances, detecting defects on targets, etc.

In some embodiments, the MEMS mirror is controlled such that the MEMS mirror is oriented according to a predetermined default orientation at a start of each respective scanning frame of a plurality of scanning frames.

To keep an updated status of the situation monitored with the present method, the various scanning frames may start with a particular orientation of the MEMS mirror. More specifically, when the scanning frame of a mirror starts, the orientation of the MEMS mirror is reoriented to a given orientation.

In some embodiments, the at least one radiation source is controlled to provide the at least one beam with data, thereby transmitting data to a target remote from the at least one mirror.

This may be particularly useful for optical communications between two or more endpoints.

In some embodiments, the target is a manned or unmanned aerial vehicle.

Aerial vehicles are particularly difficult to detect and track owing to their small size relative to the large available free space in the environment, and their small size, which may be down to the level of several centimeters. Further, movement of aerial vehicles with the freedom of movement and speeds that these vehicles feature make the tracking thereof challenging. The present method, however, makes it possible to detect and track such aerial vehicles, irrespective of whether they are manned or unmanned.

In some embodiments, the method further comprises adjusting the controlling of the MEMS mirror and/or the at least one mirror based on at least one measurement at least partially indicative of a shape of the target. In some embodiments, the at least one measurement comprises processing the at least one beam received by a receiver after having reached a target to be detected during the scanning of the at least one beam; and/or the at least one measurement comprises at least one measurement of a sensor.

The shape and orientation of the target can be of importance for the scanning procedure, because the scanning is to be focused on a region of interest on the surface of the target (given by the shape of the target), or because the surfaces of the target are so shaped that consecutive scanning points would not yield a constant or substantially constant distance between detected points of the target, or because the shape indicates what kind of target it is and, subsequently, a scanning strategy can be derived to keep track of the target. The adjustments in the controlling of the scanning mirrors can be based on the detected signals and/or sensor measurements of, e.g., the apparatus emitting the at least one beam, the apparatus detecting the at least one beam, the target itself, and/or a device remote from them all.

For instance, in some embodiments, the at least one measurement of the sensor is an optical sensor such as, e.g., a camera (of any type, e.g., RGB, polarimetric, thermal, neuromorphic, etc.), a stereo camera, a laser, etc. For example, any suitable computer vision technique known in the art may be used to determine motion, speed, shape, etc., of the target. By way of examples, images of cameras may be taken and digitally processed to derive, by way of image processing, a boundary or contour of the target, how it moves between frames, etc. Such data can then be considered for controlling the MEMS mirror.

In some embodiments, the controlling of the MEMS mirror may be adjusted to scan the at least one beam at least in the second direction based on a shape and/or an orientation of the target.

In some embodiments, the controlling of the MEMS mirror is adjusted to scan the at least one beam at least in the second direction to modify a spatial resolution of the detection of the target.

Depending on the shape of the target and/or the desired spatial resolution of the FOV based on the at least one beam transmitted, the scanning of the MEMS mirror may be adjusted, for example but without limitation, to keep pointing the at least one beam at the target if the target is tracked. The spatial resolution may be modified for the entire FOV or just for a part of the FOV.

In some embodiments, the method further comprises controlling the at least one mirror and the MEMS mirror to scan the at least one beam according to a predetermined scanning pattern upon detecting the target.

During scanning or after having scanned the at least one beam, a target may be detected. In some cases, tracking of the target is desired whereby the at least one beam is to point the target. The predetermined scanning pattern may be provided for controlling movement of both the at least one conventional mirror and the MEMS mirror, each with its respective motion, to follow the target and point the at least one beam towards it.

To this end, at least one measurement of a sensor may be used to establish the predetermined scanning pattern. By way of example, an optical sensor may provide images of the target once known where it is located, and based on the images calculate which is the scanning pattern that directs the at least one beam towards the target. As fresher measurements are provided by the optical sensor, the predetermined scanning pattern may be modified to keep the at least one beam directed towards the target.

In some embodiments, the at least one radiation source, the at least one mirror and the MEMS mirror are part of a transmitter.

The scanning mirrors and the radiation source(s) may all be embedded in a same apparatus to provide a transmitter, which may be compact in size.

In some embodiments, the at least one radiation source comprises at least one source, e.g., one or more lasers. In some embodiments, the at least one beam comprises at least one light beam.

In some embodiments, the at least one radiation source is controlled to provide the at least one beam for engraving and/or heating a target.

The engraving and/or heating of the target can be made in an accurate and flexible manner with the present method.

A second aspect relates to an apparatus. The apparatus comprises: at least one radiation source; at least one mirror; a microelectromechanical system, MEMS, mirror; and means configured to carry out a method as described in the first aspect.

The apparatus, which may be, e.g., a LIDAR, an optical communications device or equipment, a scanner, a transmitter, an engraver, additive manufacturing equipment, etc., may include the scanning mirrors and the at least one radiation source in one or multiple housings. Likewise, the apparatus may have means such as, e.g., a controller, at least one processor along with at least one memory, etc., also in the same one or multiple housings for controlling the mirrors and the at least one radiation source at least for scanning at least one beam of the at least one radiation source.

Same or similar advantages as those described with reference to the first aspect may also be applicable to this and subsequent aspects of the disclosure.

In some embodiments, the apparatus is configured to operate in a bistatic configuration, namely, it just emits or transmits at least one beam to be scanned.

In some embodiments, the apparatus further comprises a detector and the apparatus is configured to operate in a monostatic configuration, namely, it detects, in addition to emitting or transmitting, the at least one beam.

In some embodiments, the at least one radiation source comprises at least one light source.

A third aspect relates to a system. The system comprises an apparatus as described in the second aspect, and a detector for receiving at least one beam, such as at least one beam after having reached a target to be detected.

The system provides a bistatic configuration in which the apparatus emits or transmits the at least one beam to be scanned, and the detector receives and processes scattered radiation of a target resulting from the scanning of the at least one beam using separate optical paths.

A fourth aspect relates to a computer program. The computer program comprises instructions that, when executed by at least one computing device, cause the at least one computing device to conduct a method as described in the first aspect.

A fifth aspect relates to a computer-readable non-transitory storage medium comprising instructions which, when executed by at least one computing device, cause the at least one computing device to carry out the method as described in the first aspect.

A sixth aspect relates to a data carrier signal carrying a computer program as described in the fourth aspect.

A seventh aspect relates to a method. The method comprises: arranging at least one radiation source; arranging at least one mirror; arranging a MEMS mirror such that at least one beam of the at least one radiation source impinges thereon and is directed towards the at least one mirror; emitting the at least one beam with the at least one radiation source; and scanning the at least one beam in first and second directions by moving the at least one mirror to scan the at least one beam in the first direction, and by moving the MEMS mirror to scan the at least one beam in at least the second direction. The first and second directions are not parallel.

The method may at least be used for pointing and scanning at least one beam to produce a FOV in two axes, which in some cases are perpendicular axes.

The MEMS mirror provides scanning motion in at least the second direction and, at the same time, compensates for the scanning motion of the at least one conventional mirror in the first direction and/or adapts the scanning of the MEMS mirror to features (e.g., trajectory, speed, etc.) of the scanned target.

In some embodiments, movement of the MEMS mirror comprises controlling an amplitude of the movement and/or an orientation of the MEMS mirror and/or a speed of the movement.

In some embodiments, movement of the MEMS mirror comprises controlling an amplitude of the scanning at least in the second direction and/or a speed of the scanning at least in the second direction.

In some embodiments, movement of the MEMS mirror comprises: moving the MEMS mirror according to a first predetermined trajectory; moving the MEMS mirror according to a second predetermined trajectory after moving the MEMS mirror according to the first predetermined trajectory; and repeating the moving of the MEMS mirror according to the first and second predetermined trajectories a plurality of times.

In some embodiments, movement of the MEMS mirror comprises computing the first and second predetermined trajectories for the MEMS mirror one or more times in each scanning frame. In some embodiments, the method further comprises processing the at least one beam received by a detector after having reached a target to be detected during the scanning of the at least one beam. The method also comprises computing a time of flight of the at least one beam between transmission and the reception thereof.

In some embodiments, movement of the MEMS mirror is changed between the first predetermined trajectory and the second predetermined trajectory and vice versa after having computed the time of flight for the at least one beam after having started the movement according to the respective trajectory and before changing to the movement according to the subsequent trajectory.

In some embodiments, the at least one beam is emitted such that the at least one beam comprises data, thereby transmitting data to a target remote from the at least one mirror.

In some embodiments, the target is a manned or unmanned aerial vehicle.

In some embodiments, the method further comprises orienting the MEMS mirror according to a predetermined default orientation at a start of each scanning frame of a plurality of scanning frames.

In some embodiments, movement of the MEMS mirror is based on at least one measurement at least partially indicative of a shape of the target. In some embodiments, the at least one measurement comprises processing the at least one beam received by a receiver after having reached a target to be detected during the scanning of the at least one beam; and/or the at least one measurement comprises at least one measurement of a sensor.

In some embodiments, movement of the MEMS mirror is adjusted to scan the at least one beam at least in the second direction based on the shape of the target.

In some embodiments, movement of the MEMS mirror is adjusted to scan the at least one beam at least in the second direction to modify a spatial resolution of the detection of the target.

In some embodiments, the scanning of the at least one beam in the second direction is at a scanning speed at least 50 times greater than a scanning speed of the scanning of the at least one beam in the first direction. In some cases, the scanning speed in the second direction is at least 100 times greater than the scanning speed in the first direction. And in some cases, the scanning speed in the second direction is at least 150 times greater than the scanning speed in the first direction.

In some embodiments, the method further comprises scanning the at least one beam according to a predetermined scanning pattern upon detecting the target.

In some embodiments, the at least one radiation source, the at least one mirror and the MEMS mirror are part of a transmitter.

### BRIEF DESCRIPTION OF THE DRAWINGS

To complete the description and in order to provide a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 is a diagram of an apparatus or system in accordance with embodiments.
Figure 2 is a diagram of an apparatus or system in accordance with embodiments.
Figure 3 is a diagram of an apparatus or system in accordance with embodiments.
Figure 4 is a graph showing an example scanning pattern with a MEMS mirror of an apparatus or system in accordance with embodiments.
Figure 5 is a graph showing an example scanning pattern with a MEMS mirror of an apparatus or system in accordance with embodiments.
Figure 6 is a graph showing an example scanning pattern with a MEMS mirror of an apparatus or system in accordance with embodiments.
Figure 7 is a diagram of a method in accordance with embodiments.
Figure 8 is a diagram of some steps of a method in accordance with embodiments.

### DETAILED DESCRIPTION

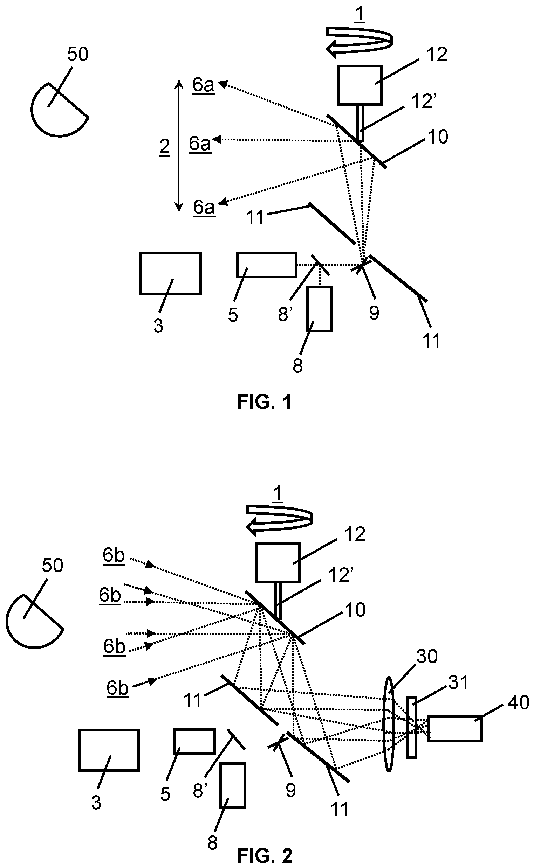

Figure 1 is a diagram of an apparatus or system in accordance with embodiments.

The apparatus or system includes at least one radiation source 5 configured to emit or radiate one or more beams 6a (shown with dashed lines for the sake of clarity only). For example, the radiation source 5 may be a light source that emits or radiates one or more light beams. The light source may be, e.g., a laser, an LED, an SLED, a lamp, or other radiation source at any suitable wavelength. The at least one radiation source 5 may provide the beams 6a in a pulsed manner or in a continuous manner. The at least one radiation source 5 may include optics such as, e.g., a collimator.

The apparatus or system includes a MEMS mirror 9 and at least one other mirror 10, for example a conventional mirror or a large mirror for scanning the beams 6a in a first direction 1. The at least one conventional mirror 10 scans the beams 6a with motion means 12, e.g., at least one motor coupled 12' with the at least one mirror 10. The MEMS mirror 9, which may be of resonant geometry or of non-resonant geometry, preferably has at least two degrees of freedom for enabling superior control of the scanning of the beams 6a in at least a second direction 2, and in some cases also scanning of the beams 6a in the first direction 1. In some embodiments, the MEMS mirror 9 is one-dimensional.

The scanning pattern in the first direction 1 may be, for example, full rotations (e.g., 360°) or partial rotations (e.g., 270°, 180°, 120°, etc.) about an axis that provide a scanning path with respect to the first direction 1. In other embodiments, the scanning pattern in the first direction 1 is not rotatory, but of a linear or curved motion, e.g., with a rack-and-pinion, for example.

The scanning pattern in the second direction 2 may be, for example, partial rotations (e.g., 10°, 20°, 45°, etc.), linear motions or curved motions, including complex shapes such as, e.g., Lissajous curves, spiral curves, etc. In some embodiments, like in this example, the first and second directions 1, 2 are perpendicular directions whereas, in some other embodiments, the first and second directions 1,2 are not perpendicular but not parallel either.

Beams 6a of the radiation source 5 may be split up with a beam splitter 8' to have part thereof provided to an optical detector 8 such as a photodetector, and part thereof directed to the MEMS mirror 9 for scanning the beams 6a, at least, in the second direction 2. The optical detector 8 may be used to monitor the emitted beam, particularly one or more features thereof such as, e.g., power, frequency, wavelength, timing, etc.

The scanned beams 6a are directed to the at least one mirror 10. The beams 6a may first go through one or more mirrors 11 that may be partially transparent or have an opening for letting the beams 6a reach the at least one mirror 10. The at least one mirror 10 is moved owing to the motion means 12 to scan the beams 6a along the first direction 1 and out from the apparatus or system towards the environment, which is a physical medium such as, e.g., air, free-space, water including seawater, void, etc.

The apparatus or system also comprises means 3 such as, e.g., a controller, that is at least communicatively coupled with the at least one radiation source 5, the MEMS mirror 9, the at least one mirror 10 and/or the motion means 12 thereof, and the optical detector 8. The apparatus or system may, accordingly, operate according to a given time sequence.

Although not illustrated, the same apparatus or system may also be used for detecting beams (such as beams 6b as illustrated with reference to the embodiments of Figure 2) reaching the apparatus or system to adjust the controlling of the MEMS mirror 9 and, optionally, of the at least one mirror 10 to detect presence of a target 50, to track the target 50, etc. Detection of the beams may be conducted with a configuration like that described in relation to the embodiments of Figure 2, which in some embodiments is also part of the apparatus or system of Figure 1.

Figure 2 is a diagram of an apparatus or system in accordance with embodiments.

The apparatus or system operates at least for reception; beams 6b captured in reception have been represented. Accordingly, in addition to the mirrors 9, 10, 11, and the motion means 12, the apparatus or system also includes optics 30, a filter 31, e.g., a band-pass filter, and a detector 40. When the apparatus or system also operates for transmission, the radiation source 5, the optical detector 8 and the beam splitter 8' are also provided, like in the embodiments illustrated in Figure 2.

The captured beams 6b, namely, beams dispersed or reflected from a surface of a target 50, are directed to the at least one mirror 10 and then reflected to the one or more mirrors 11. From the one or more mirrors 11, the beams 6b are reflected to the detector 40 through the optics 30 that preferably concentrate the beams 6b to the detector 40.

The means 3 is also communicatively coupled with the detector 40, either in wireless or in wired form.

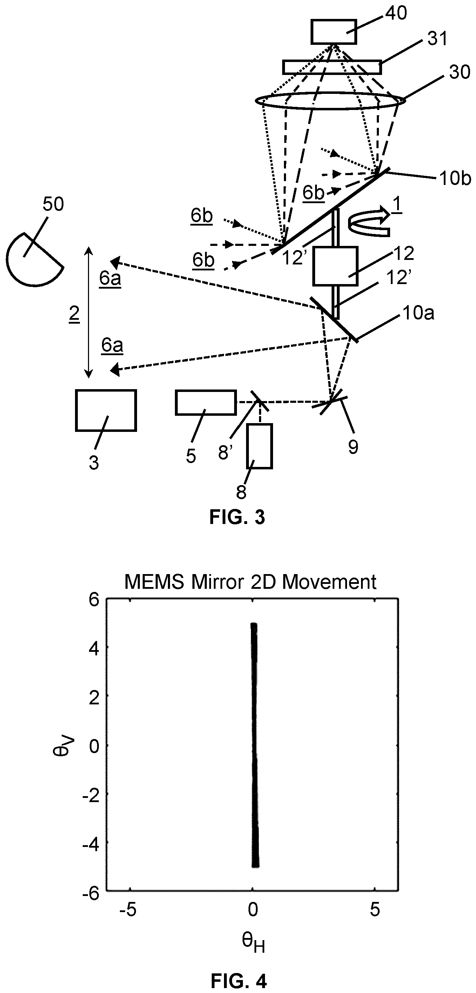

Figure 3 is a diagram of an apparatus or system in accordance with embodiments.

The apparatus or system includes the at least one radiation source 5 configured to emit or radiate one or more beams 6a. The one or more beams 6a reach the MEMS mirror 9 and then a first mirror 10a of the at least one other mirror, thereby allowing to scan the one or more beams 6a in the first and second directions 1, 2. The first conventional mirror 10a scans the beams 6a with the motion means 12.

Captured beams 6b that may reach the apparatus or system after having impinged on the target 50 arrive at a second mirror 10b of the at least one conventional mirror 10, which is also moved with the motion means 12 coupled therewith 12'. Accordingly, the second mirror 10b is rotated for reorientation thereof together with the rotation of the first mirror 10a while the latter scans the beams 6a in the first direction 1.

The beams 6b are directed from the second mirror 10b to the detector 40 through the optics 30. The beams 6b may go through a filter 31, e.g., a band-pass filter, before reaching the detector 40.

The controller means 3 processes the emitted and the detected beams 6a, 6b for the use that the apparatus or system is provided, e.g., LIDAR, optical communications, additive manufacturing, soldering, etc.

Figure 4 is a graph showing an example scanning pattern with a MEMS mirror of an apparatus or system in accordance with embodiments.

The graph illustrates a line scan of the MEMS mirror that oscillates according to both angle θ_{V} in the second direction and angle θ_{H} in the first direction. Therefore, as at least one beam is scanned in the first direction due to at least one conventional or large mirror, the MEMS mirror is moved following a path of angles θ_{H} and θ_{V} that compensates for the variation in angle introduced by the actual scanning in the first direction during each scanning frame. Therefore, even if the at least one mirror keeps scanning the beam in the first direction, the second direction can be scanned without distortions owing to the compensation in the first direction that the MEMS mirror provides.

The pointing of the beams may also be actively adjusted according to characteristics of the target under observation, such as, e.g., the shape and/or the orientation thereof. Additionally or alternatively, the oscillation of the MEMS mirror may have its speed and/or amplitude adjusted to make the scanning in the second direction focused on an area of interest (of the target or not) or the motion of the target.

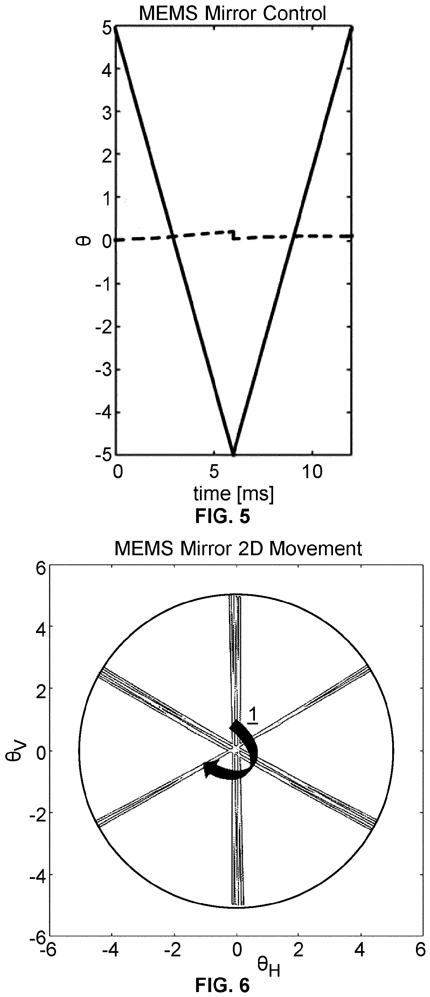

Figure 5 is a graph showing an example scanning pattern with a MEMS mirror of an apparatus or system in accordance with embodiments.

The dashed line represents the orientation of the MEMS mirror for the scanning of beams in the first direction, whereas the solid line represents the orientation of the MEMS mirror for the scanning of beams in the second direction.

As it can be seen in the graph, in this example, the oscillation of the MEMS mirror in the first direction is not constant. The speed at which the angle is imparted to the MEMS mirror is variable throughout the scanning frame to compensate for the changes in the first direction during the scanning frame due to the at least one conventional mirror. Adjusting the speed of the rotation of the MEMS mirror and the change in angle in the first direction may improve said compensation. Accordingly, both the speed and the angles of the oscillation in the first direction are based on the scanning of the at least one beam by the at least one conventional mirror in the first direction. In some other examples, the compensation is achieved by additionally or alternatively modifying an amplitude of the oscillation of the MEMS mirror in the first direction and/or an orientation thereof with respect to the first direction.

Although in this example the oscillation of the MEMS mirror in the second direction has a constant speed in a first predetermined trajectory (in this example, between 0 and 6 milliseconds) and a second predetermined trajectory (in this example, between 6 and 12 milliseconds), in some other examples there are also changes in speed in the second direction, for instance when a higher sampling density is desired for a particular part of the FOV. Likewise, in some examples, the first predetermined trajectory or the second predetermined trajectory may last less than the other trajectory.

In some other examples, the scanning of the MEMS mirror in a scanning frame is shorter than that illustrated in the embodiments of Figure 5, namely it lasts less than 12 milliseconds, whereas in some other examples said scanning is longer than that illustrated in the embodiments of Figure 5, namely it lasts more than 12 milliseconds.

Figure 6 is a graph showing an example scanning pattern with a MEMS mirror of an apparatus or system in accordance with embodiments.

The graph partially illustrates (the graph shows the oscillation for several scanning frames for the sake of clarity only) an example oscillation of the MEMS mirror as the at least one mirror scans beams in the first direction as shown with the rotating arrow.

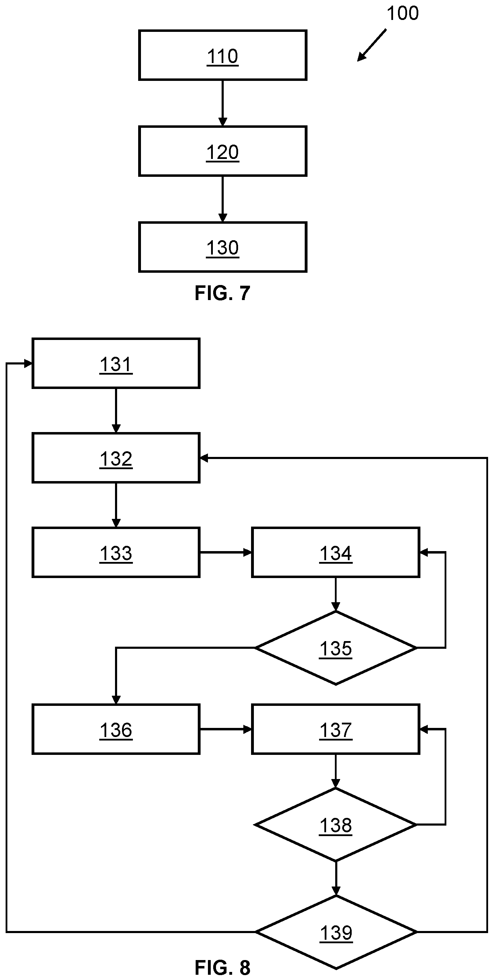

Figure 7 is a diagram of a method 100 in accordance with embodiments.

The method 100 includes a step whereby means such as e.g., at least one controller, at least one processor, etc., control 110 at least one radiation source to emit at least one beam.

The method 100 includes a step whereby the means control 120 at least one mirror to scan the at least one beam in a first direction.

The method 100 includes a step whereby the means control 130 a MEMS mirror in a configuration like that illustrated in Figure 1. The controlling 130 of the MEMS mirror is such that it scans the at least one beam in at least a second direction. The second direction is different from the first direction.

Preferably, the control 130 of the MEMS mirror is such that, for each scanning frame, it combines its own movement for scanning along the second direction and, optionally, along the first direction with the movement of the at least one mirror for scanning along the first direction as a result of the control 120. Accordingly, full FOV in the second direction may be obtained per each scanning step in the first direction, thereby obtaining an accurate FOV in two directions.

Figure 8 is a diagram of some steps of a method in accordance with embodiments. The steps may be part of a control of a MEMS mirror for scanning beams in at least the second direction, such as the controlling 130 of the method 100 of Figure 7.

As part of the MEMS mirror control, the method includes a step whereby the means control 131 the MEMS mirror to orient said mirror according to a predetermined default orientation at a start of each scanning frame of a plurality of scanning frames. Aside from the reorientation of the MEMS mirror in each scanning frame, also at the beginning of the scanning frame of the at least one conventional mirror, its orientation defaults to a given orientation for the new scanning frame to be produced, even though the reorientation of the at least one conventional mirror occurs much less frequently than the reorientation of the MEMS mirror owing to the durations of the respective scanning frames.

The method also includes a step whereby the means compute 132 first and second trajectories (e.g., outgoing and backwards trajectories) for the MEMS mirror for the scanning frame, which may have been started with the computation 132 or after the computation 132. The trajectories will provide the oscillation of the MEMS mirror yielding the performance of, for example, Figures 4, 5 or 6.

The method also includes a step whereby the means control 133 the MEMS mirror to move according to one of the two trajectories computed 132, either the first or the second trajectory to scan the at least one beam.

The method also includes a step whereby the means may compute 134 a time of flight of a beam between emission thereof and detection thereof after having reached a target of interest.

While the imparted trajectory in the controlling 133 of the MEMS mirror has not ended 135. If not ended 135 yet, the MEMS mirror keeps moving and the time of flight keeps being computed 134. If ended 135, a step follows whereby the means control 136 the MEMS mirror to move according to the other one of the two trajectories computed 132 to keep its scanning of the at least one beam.

Again, there may a step whereby the means compute 137 a time of flight of a beam between emission thereof and detection thereof after having reached a target of interest.

While the imparted trajectory in the controlling 136 of the MEMS mirror has not ended 138. If not ended 138 yet, the MEMS mirror keeps moving and the time of flight keeps being computed 137. If ended 138, and the scanning frame has been finished 139, a new scanning frame is started with the control 131 whereas, if the scanning frame has not been finished 139, new trajectories are computed 132 for further scanning by the MEMS mirror with time of flight measurements being computed.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method (100) comprising:
controlling (110) at least one light source (5) to emit at least one light beam (6a);
controlling (120) at least one mirror (10) to scan the at least one light beam in a first direction (1); and
controlling (130) a microelectromechanical system, MEMS, mirror (9) that the at least one light beam impinges on and directs towards the at least one mirror, wherein the MEMS mirror is controlled to modify how the at least one light beam impinges on the at least one mirror to further scan the at least one light beam in at least a second direction (2) not parallel to the first direction.

2. The computer-implemented method (100) of claim 1, wherein controlling the MEMS mirror (9) comprises scanning the at least one light beam (6a) in at least the second direction (2) while compensating, during a scanning frame, for motion occurring in the first direction (1) in the scanning frame due to the scanning in the first direction by the at least one mirror (10).

3. The computer-implemented method (100) of any one of the preceding claims, wherein controlling the MEMS mirror (9) comprises controlling:
an amplitude of a movement thereof and/or an orientation thereof and/or a movement speed thereof; and/or
an amplitude of the scanning in the second direction (2) and/or a speed of the scanning in the second direction.

4. The computer-implemented method (100) of any one of the preceding claims, wherein the controlling of the MEMS mirror (9) comprises: adjusting a trajectory of a movement of the MEMS mirror (9) during the scanning thereof such that the trajectory is adjusted to a movement of the at least one mirror (10) during the scanning thereof to provide a field of view having either a uniform sampling density across the field of view or a high sampling density in at least some predetermined areas of interest of the field of view.

5. The computer-implemented method (100) of any one of the preceding claims, wherein the controlling of the MEMS mirror (9) is such that the MEMS mirror further scans the at least one light beam (6a) in the first direction (1) compensating for scanning motion in the first direction by the at least one mirror (10) in each scanning frame.

6. The computer-implemented method (100) of claim 5, wherein the MEMS mirror scans the at least one light beam (6a) in the first direction (1) with variable speed within each scanning frame.

7. The computer-implemented method (100) of any one of the preceding claims, wherein the controlling of the MEMS mirror (9) comprises:
moving the MEMS mirror according to a first predetermined trajectory;
moving the MEMS mirror according to a second predetermined trajectory after moving the MEMS mirror according to the first predetermined trajectory, the first and second predetermined trajectories at least producing an opposite scanning along the second direction (2); and
repeating the movement of the MEMS mirror according to the first and second predetermined trajectories a plurality of times.

8. The computer-implemented method (100) of any one of the preceding claims, further comprising processing the at least one light beam (6b) received by a detector (40) after having reached a target (50) to be detected during the scanning of the at least one light beam; and computing a time of flight of the at least one light beam between transmission and the reception thereof.

9. The computer-implemented method (100) of claim 8 when depending upon claim 7, wherein movement of the MEMS mirror (9) is changed between the first predetermined trajectory and the second predetermined trajectory and vice versa subsequent to having computed the time of flight for the at least one beam (6a, 6b) after having started the movement according to the respective trajectory and before changing to the movement according to the subsequent trajectory.

10. The computer-implemented method (100) of any one of the preceding claims, wherein the at least one light source (5) is controlled to provide the at least one light beam (6a) with data, thereby transmitting data to a target (50) remote from the at least one mirror (10).

11. The computer-implemented method (100) of claim 10, wherein the target (50) is a manned or unmanned aerial vehicle.

12. The computer-implemented method (100) of any one of the preceding claims, wherein the MEMS mirror (9) is controlled such that the MEMS mirror is oriented according to a predetermined default orientation at a start of each respective scanning frame of a plurality of scanning frames.

13. The computer-implemented method (100) of any one of the preceding claims, further comprising adjusting the controlling of the MEMS mirror (9) and/or the at least one mirror (10) based on at least one measurement at least partially indicative of a shape of the target (50), wherein the at least one measurement comprises:
processing the at least one light beam (6b) received by a receiver after having reached a target to be detected during the scanning of the at least one light beam; and/or
at least one measurement of a sensor.

14. An apparatus comprising: at least one light source (5); at least one mirror (10); a microelectromechanical system, MEMS, mirror (9); and means (3) configured to carry out a method according to any one of the preceding claims.

15. A method comprising:
arranging at least one light source (5);
arranging at least one mirror (10);
arranging a microelectromechanical system, MEMS, mirror (9) such that at least one light beam (6a) of the at least one light source impinges thereon and is directed towards the at least one mirror;
emitting the at least one light beam with the at least one light source; and
scanning the at least one light beam in first and second directions (1, 2) by moving the at least one mirror to scan the at least one light beam in the first direction, and by moving the MEMS mirror to scan the at least one light beam in at least the second direction;
wherein the first and second directions are not parallel.
